# EUROPEAN PATENT APPLICATION

(11) **EP 2 275 219 A1**
(43) Date of publication of application: **19.01.2011**
(21) Application number: 10251258.9
(22) Date of filing: 13.07.2010
(51) Int. Cl.: B23D 49/16, B23D 51/02

(54) **Shoe assembly for reciprocating saw**

(30) Priority: 15.07.2009 US 503408
(71) Applicant: Techtronic Power Tools Technology Limited, Road Town, Tortola (VG)
(72) Inventor: Harrison, Ryan, Anderson, SC 29621 (US); McCracken, Robert E., Anderson, SC 29625 (US); Bowen, Daniel J., Aiken, SC 29803 (US)
(74) Representative: Holmes, Matthew Peter

(57) **Abstract**

A shoe assembly (30), for use on a reciprocating saw (10) having a housing (14) and a saw blade (26), includes a shoe support (34) coupled to the housing (14) and having a longitudinal axis. The shoe support (34) includes a base member (46) extending at least partially along the longitudinal axis to define a first plane (48). The shoe assembly (30) further including a shoe (38) pivotably coupled to the shoe support (34). The shoe (38) includes a contact surface (102) defining a second plane (104) and a blade aperture (142) defined by the contact surface (102) to allow the saw blade (26) to pass therethrough. The shoe (38) further includes plurality of locking positions, each locking position corresponding to an engagement angle, where the engagement angle is defined as the angle between the first plane (48) and the second plane (104). The shoe assembly (30) further includes a locking pin (42) coupled to the shoe support (34) and moveable between a first position, where the shoe (38) is able to pivot with respect to the shoe support (34), and a second position, wherein the pin (42) engages the shoe (38) to maintain the shoe in one of the plurality of engagement angles.

## Description

### FIELD OF THE INVENTION

The present invention relates to a shoe assembly for a reciprocating saw.

### BACKGROUND TO THE INVENTION

Power reciprocating saws are often used in construction and home improvement projects for cutting materials. The saws incorporate reciprocating shafts for driving generally linear saw blades along a predetermined path so as to provide one of a rectilinear or orbital cutting action. Typically, reciprocating saws employ a shoe assembly able to engage a work piece and provide stability to the saw while cutting. Some shoe assemblies freely pivot about an axis to allow the user to adjust an angle at which the blade engages the work piece during a cut. However, it is troublesome for a user to maintain a constant cutting angle, specifically during long cuts. Further, a freely pivoting shoe requires a user to apply downward force towards a work piece or in the direction of the cut when cutting certain work pieces. Applying these forces requires the user to place their hand near the blade to press down into the work piece and gain leverage, which can prove dangerous with the hand positioned so close to the blade.

### SUMMARY OF THE INVENTION

According to a first aspect of the invention there is provided a shoe assembly for use with a reciprocating saw having a housing and a saw blade, the shoe assembly comprising:
a shoe support having a longitudinal axis and a base member extending at least partially along the longitudinal axis, wherein the base member defines a first plane;
a shoe pivotably coupled to the shoe support, the shoe including a contact surface defining a second plane and a blade aperture , the shoe further including a plurality of locking positions, each locking position corresponding to an engagement angle, wherein the engagement angle is defined as the angle between the first plane and the second plane; and
a locking pin coupled to the shoe support and moveable between a first position, wherein the shoe is able to pivot with respect to the shoe support, and a second position, wherein the pin engages the shoe to maintain the shoe in one of the plurality of engagement angles.

Preferably, the engagement angle of one of the plurality of locking positions is approximately 90 degrees.

Preferably, the engagement angle of at least one locking position is greater than 90 degrees and the engagement angle of at least one locking position is less than 90 degrees.

Preferably, the shoe includes a plurality of apertures, each aperture defining one of the locking positions, and further wherein the locking pin is received by one of the plurality of apertures when in the second position.

Preferably, the locking pin includes at least one detent recess.

Preferably, the shoe assembly further includes a locking spring engageable with the detent recess of the locking pin to maintain the locking pin in either of the first and second positions.

Preferably, the shoe includes three locking positions.

Preferably, the shoe further includes a bracket extending substantially perpendicular to the second plane to define the plurality of locking positions.

Preferably, the bracket defines a plurality of apertures, each aperture corresponding to one of the locking positions, and further wherein the locking pin is received by one of the plurality of apertures when in the second position.

Preferably, the shoe assembly further includes a bracket extending rearwardly from the contact surface, the bracket including the plurality of locking positions.

Preferably, the bracket defines three locking positions.

Preferably, each locking position is an aperture formed in the bracket.

Preferably, the locking pin engages the bracket to maintain the shoe in one of the plurality of locking positions.

Preferably, the bracket includes a plurality of apertures, each aperture corresponding to one of the locking positions and further wherein the locking pin is received by one of the apertures when in the second position.

According to a second aspect of the invention there is provided a reciprocating saw comprising a housing; a motor positioned within the housing; a spindle operatively coupled to the motor and moveable with respect to the housing; a blade coupled to the spindle; and the shoe assembly, wherein the show support is coupled to the saw housing.

Further aspects of the invention will become apparent from the following description.

### BRIEF DESCRIPTION OF THE DRAWINGS

Fig. 1 is a perspective view of a reciprocating saw fitted with a shoe assembly according to one construction of the invention.
Fig. 2 is a perspective view of the shoe assembly shown in Fig. 1.
Fig. 3 is a rear perspective view of the shoe assembly of Fig. 2.
Fig. 4 is an exploded, assembly view of the shoe assembly of Fig. 2.
Fig. 5 is a top view of the shoe assembly of Fig. 2 with a locking pin in a first position.
Fig. 6 is a top view of the shoe assembly of Fig. 2 with the locking pin in a second position.
Fig. 7 is a side view of the shoe assembly of Fig. 2 with a shoe producing one engagement angle.
Fig. 8 is a side view of the shoe assembly of Fig. 2 with the shoe producing another engagement angle.
Fig. 9 is a side view of the shoe assembly of Fig. 2 contacting a work piece.

### DETAILED DESCRIPTION OF THE PREFERRED EMBODIMENTS

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

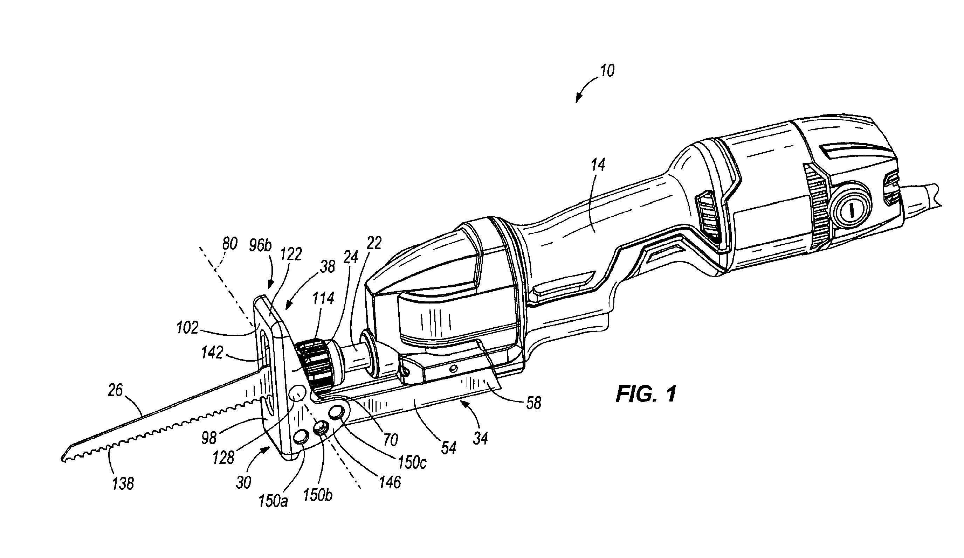

Fig. 1 illustrates a reciprocating saw 10 including a housing 14, a motor (not shown) positioned within the housing 14, a spindle 22 operatively coupled to the motor, a saw blade 26 removably coupled to the spindle 22 by a blade clamp mechanism 24 and a shoe assembly 30 coupled to the housing 14. During operation, rotary output from the motor 18 is converted into a reciprocating motion of the spindle 22. As such, the saw blade 26, coupled to the spindle 22, oscillates in a generally rectilinear or orbital path.

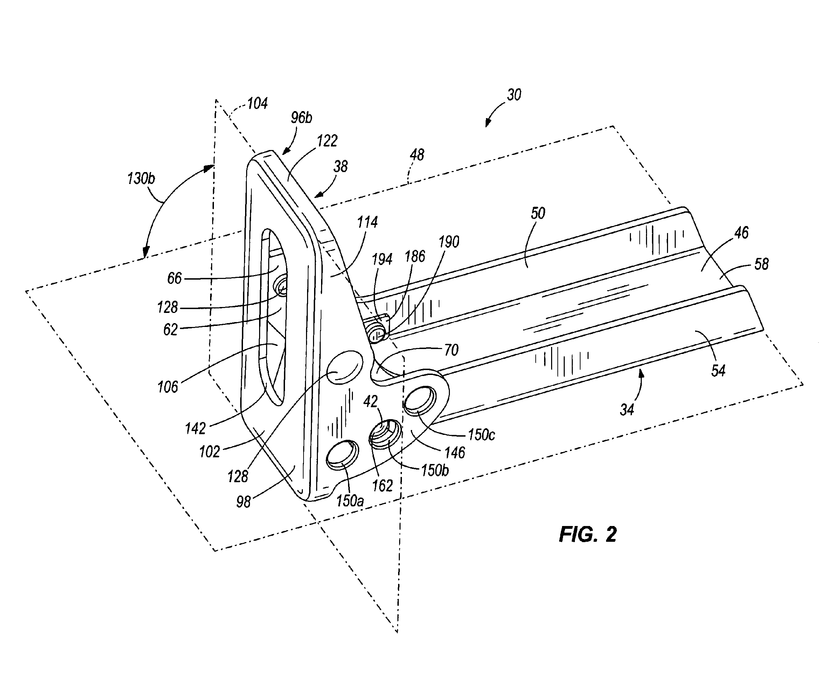

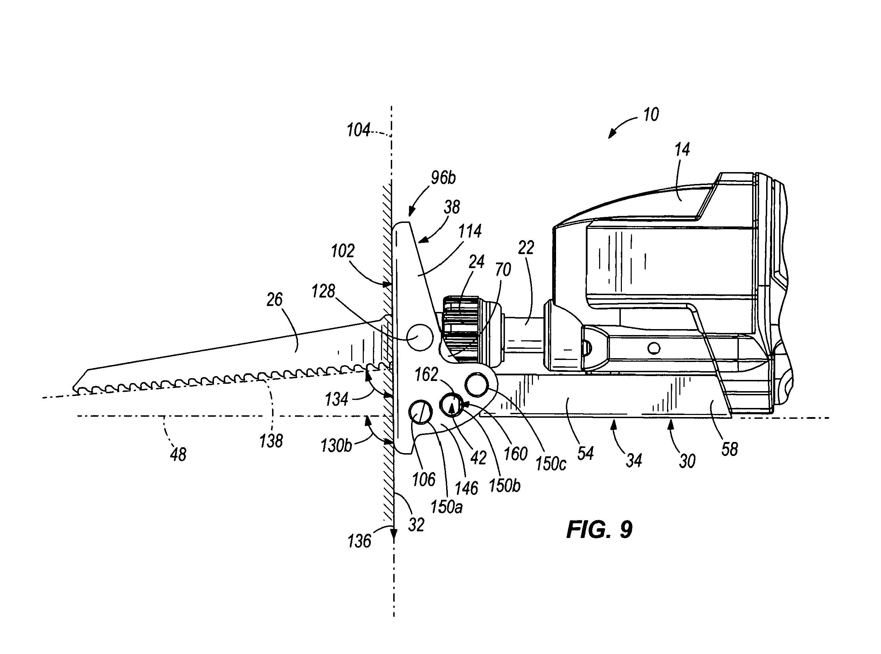

Figs. 2-8 illustrate the shoe assembly 30, which is coupled to and adjustable with respect to the housing 14 of the reciprocating saw 10. The shoe assembly 30 includes a shoe support 34, a shoe 38 pivotably coupled to the shoe support 34, and a locking pin 42 engageable with the shoe 38 to hold the shoe 38 in multiple positions with respect to the shoe support 34. The shoe assembly 30 maintains the position of the reciprocating saw 10 with respect to a work piece 32 (Fig. 9) during a cutting operation. The shoe assembly 30 allows the user to rest the saw 10 against the work piece 32 such that the shoe assembly 30 absorbs at least a portion of the force produced during the cutting action. In the illustrated construction, the shoe assembly 30 is adjustable to limit both the depth of the cut and/or to maintain an angle at which the blade 26 engages the work piece 32.

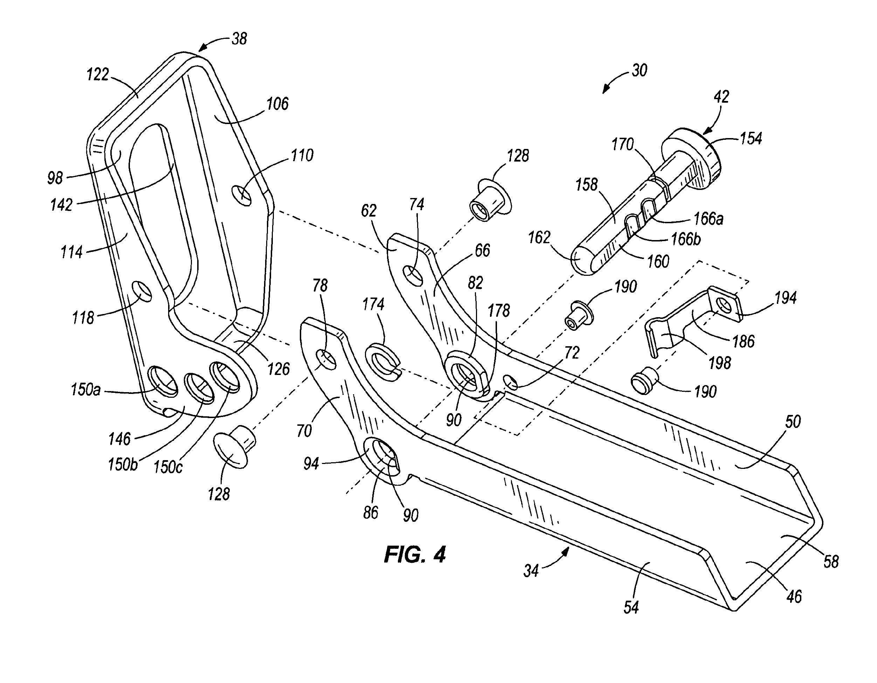

Referring to Fig 4, the shoe support 34 includes a base member 46 defining a first plane 48 substantially parallel to the base member 46, a first side member 50 extending substantially perpendicular to the base member 46 along one edge, and a second side member 54 extending substantially perpendicular to the base member 46 along an opposite edge from the first side member 50. The shoe support 34 further includes a first end 58 slidably coupled to the housing 14 and a second end 62 to which the shoe 38 is pivotably coupled. In the illustrated construction, the first end 58 of the shoe support 34 is substantially U-shaped for receiving at least a portion of the housing 14 such that the shoe support 34 is linearly adjustable with respect to the housing 14. The first and second side members 50, 54 extend substantially perpendicular the base member 46 to produce the U-shape of the shoe support 34. In other constructions, the first end 58 includes alternate configurations and structure corresponding to a specific housing shape. In yet another construction, the first end 58 is fixedly coupled to the housing 14.

Each of the first and second side members 50, 54 include a first and second extension member 66, 70, respectively, at the second end 62 of the support 34. The extensions 66, 70 extend from the side member 50, 54 generally upwardly and outwardly from the base member 46. In the illustrated construction, the first and second side members 50, 54 are each generally uniform in height, however, in further constructions, the first and second side members may include other forms suitable for being adjustably coupled to the housing 14. In some constructions, the first and/or second side members 50, 54 may include provisions 72 (e.g., an aperture) to retain a locking spring 186 (described below).

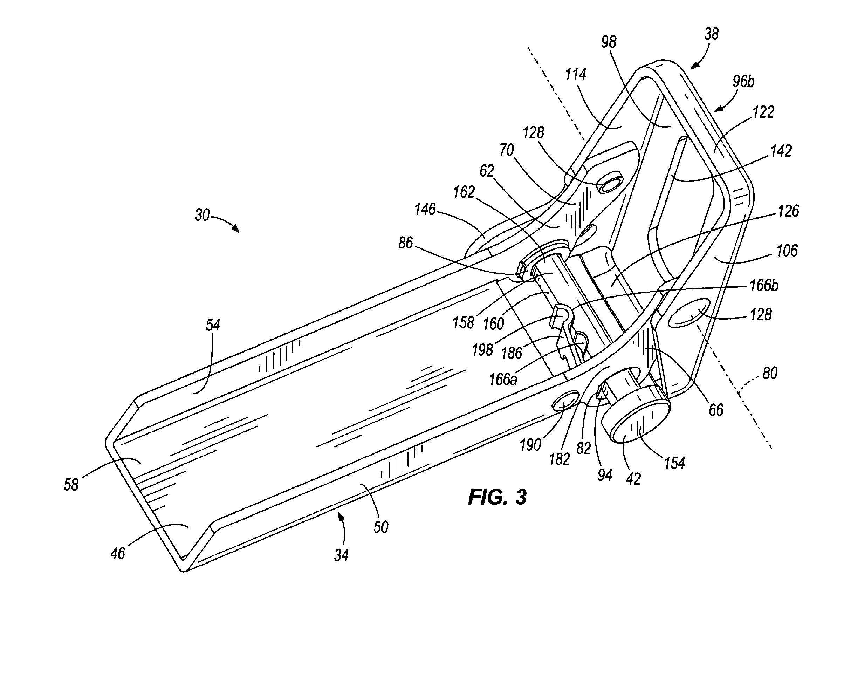

Referring again to Fig. 4, the first extension member 66 extends upwardly and outwardly from the side member 50, and includes a first pivot recess 74 and a first locking pin boss 82. Similarly, the second extension member 70 extends upwardly and outwardly from the side member 54, and includes a second pivot recess 78 co-axially aligned with the first pivot recess 74 to define a pivot axis 80 (Fig. 3). The second extension member 70 further includes a second locking pin boss 86 co-axially aligned with the first locking pin boss 82. In the illustrated embodiment the first and second extension members 66, 70 extend from the side members 50, 54 a sufficient distance to provide clearance between the shoe 38 and the shoe support 34 such that the shoe 38 may pivot without interference by the shoe support 34.

The first and second locking pin bosses 82, 86, defining apertures, are formed in the first and second extension members 66, 70, and each of the bosses 82, 86 is shaped to receive at least a portion of the locking pin 42. The bosses 82, 86 are generally D-shaped, having a flat surface 90 corresponding to a flat surface 160 of the locking pin 42 (described below) to restrict the pin 42 from rotating within the bosses 82, 86. In some constructions, the locking pin bosses 82, 86 may extend inwardly and/or outwardly from the extension members 66, 70 to provide additional support to the locking pin 42. In the illustrated construction, the locking pin bosses 82, 86 includes a radiused or chamfered edge 94 to facilitate installation and/or movement of the locking pin 42.

In some constructions, features of the extension members 66, 70 and the side members 50, 54, such as the pivot recesses 74, 78 and the locking pin bosses 82, 86, are interchangeable. Further, the shoe support 34 may not include the extension members 66, 70 such that the shoe 38 is coupled directly to the side members 50, 54.

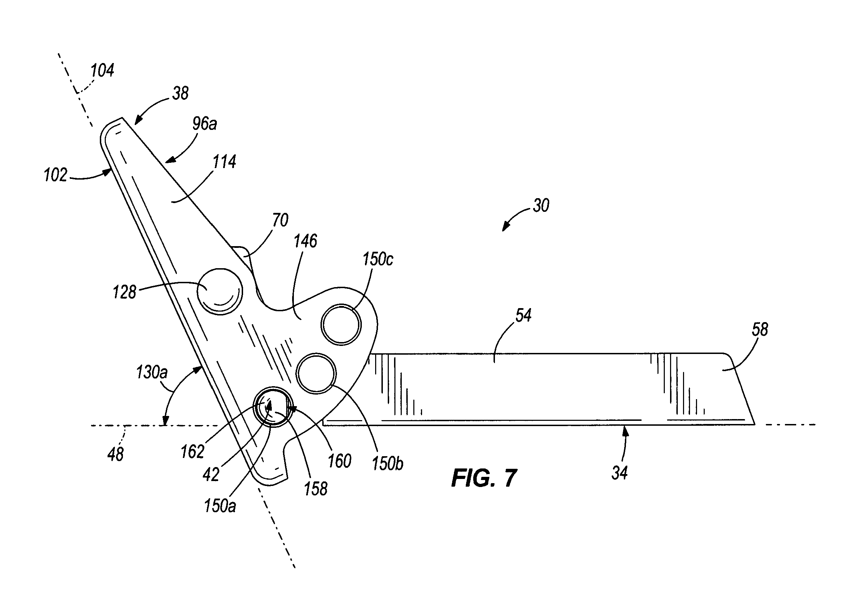

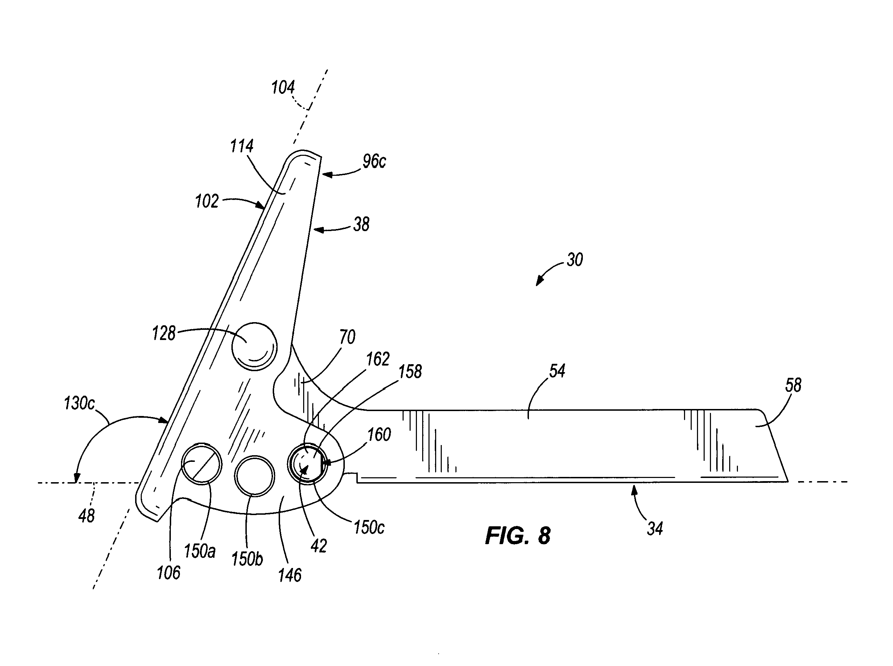

Illustrated in Figs. 1-8, the shoe 38 is pivotably coupled to the shoe support 34 and provides locking positions 96a (Fig. 7), 96b (Fig. 2), and 96c (Fig. 8). The shoe 38 includes a base member 98 having a contact surface 102 defining a second plane 104 substantially parallel to the contact surface 102. A first side member 106 extends substantially perpendicular to the base member 98 away from the contact surface 102 and defines a third pivot recess 110, and a second side member 114 extends substantially perpendicular to the base member 98 away from the contact surface 102 and opposite from the first side member 106. The second side member 114 defines a fourth pivot recess 118 co-axially aligned with the third pivot recess 110. End members 122, 126 extend between the first and second side members 106, 114 substantially perpendicular to the base member 98 and away from the contact surface 102.

The shoe 38 is coupled to the shoe support 34 by fasteners 128, which is a rivet in the illustrated construction, and rotates about pivot axis 80 when coupled to the shoe support 34. During operation of the reciprocating saw 10, the shoe 38 may pivot to position the contact surface 102 substantially flat against the work piece 32 (see Fig. 9).

The base member 98 of the shoe 38 has a generally rectangular shape and includes a blade aperture 142 through which the saw blade 26 passes. The contact surface 102 is generally planar, although in further constructions other surface contours may be used to better suit a particular work piece (e.g., a curved surface to engage a pipe, etc.). The blade aperture 142 is shaped to receive at least a portion of the saw blade 26 and provides sufficient clearance to allow the blade 26 to reciprocate in a rectilinear or orbital manner without interference by the shoe 28. In other constructions, the blade aperture 142 may be open to define a U-shape.

Referring to Figs. 2, 4, 7 and 8, the second side member 114 includes a bracket 146 extending rearwardly from the contact surface 102 and substantially perpendicular to the second plane 104. The bracket 146 defines apertures 150a, 150b, and 150c, with each of the apertures corresponding to one of the locking positions 96a, 96b, and 96c, respectively. Each of the apertures 150a, 150b, 150c is radially positioned an equal distance from the pivot recess 118, whereby the distance corresponds to a radial distance between the pivot axis 80 and the locking pin boss 86 on the shoe support 34. In the illustrated construction, the apertures 150a, 150b, 150c are positioned such that when the shoe 38 is pivoted with respect to the shoe support 34, each of the apertures aligns with the locking pin boss 86 at a particular engagement angle.

Locking positions 96a, 96b, and 96c, and thereby the apertures 150a, 150b, and 150c, correspond to a respective engagement angle 130a, 130b, and 130c. The corresponding engagement angle of the apertures 150a, 150b, and 150c is defined as an angle between the first plane 48 and the second plane 104 (Figs. 2, 7 and 8). As the shoe 38 rotates with respect to the shoe support 34, the second plane 104 rotates with respect to the first plane 48 producing a new engagement angle. In the illustrated construction, the engagement angle 130a corresponding to aperture 150a is approximately 70° (Fig. 7), the engagement angle 130b corresponding to aperture 150b is approximately 90° (Fig. 2), and the engagement angle 130c corresponding to aperture 150c is approximately 110° (Fig. 8).

In the illustrated construction, the shoe 38 includes three locking positions 96a, 96b, 96c defined by the apertures 150a, 150b, 150c, each of the locking positions 96a, 96b, 96c providing a different engagement angle 130a, 130b, 130c. In further constructions, fewer locking positions may be provided by the shoe 38 (e.g., only two apertures are provided) or four or more locking positions may be provided.

Referring to Fig. 9, in the illustrated construction, each of the locking position apertures 150a, 150b, 150c also corresponds to a cutting edge angle 134, which is defined as an angle at which a cutting edge 138 of the saw blade 26 engages the work piece with respect to a direction of the cut 136. Furthermore, in the illustrated construction, the shoe support 34 may be adjusted with respect to the housing 14 (e.g., adjusting the depth of cut) without affecting the engagement angles 150a, 150b, 150c or the cutting edge angle 134.

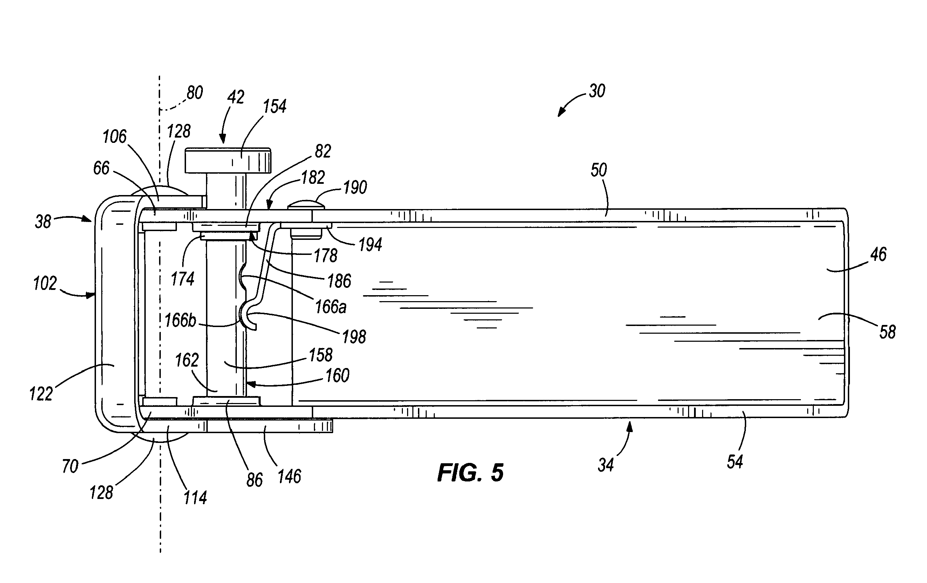

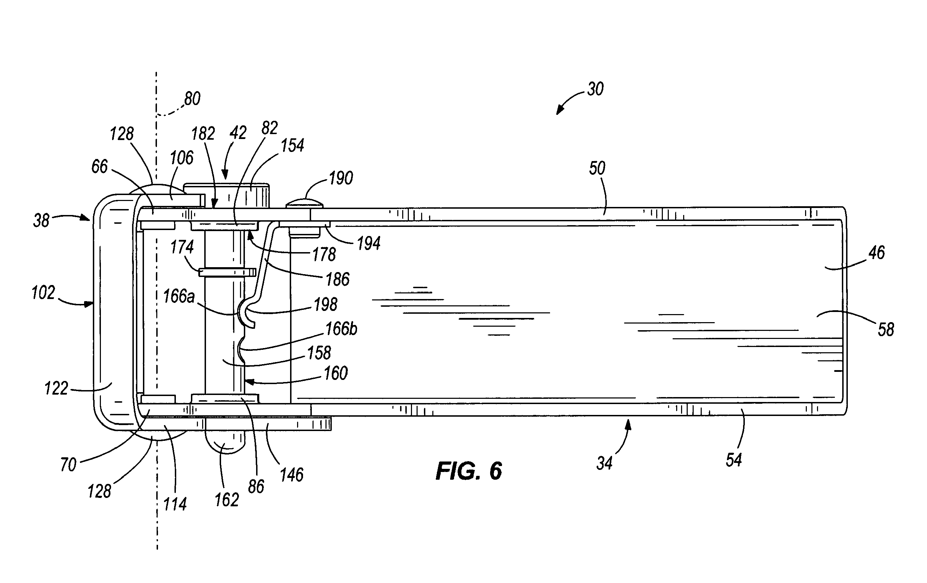

Referring to Figs. 4-6, the locking pin 42 is coupled to the shoe support 34 and is moveable between a first position (Fig. 5), in which the shoe 38 is free to pivot with respect to the shoe support 34, and a second position (Fig. 6), in which the shoe 38 is locked with respect to the shoe support 34 in one of the locking positions 96a, 96b, 96c. In the illustrated construction, the locking pin 42 is moveable with respect to the shoe support 34 between the first and second positions.

The locking pin 42 includes a head portion 154 and a shaft portion 158 extending axially from the head portion 154. The head portion 154 of the locking pin 42 is substantially cylindrical, having an outer diameter greater than an outer diameter of the shaft portion 158. The head portion 154 is sized to allow a user to grasp the head and move the locking pin 42 between the first and second positions. The shaft portion 158 has a substantially D-shaped cross section including a planar surface 160, which corresponds to the planar surfaces 90 of the locking pin bosses 82, 86, and a distal end 162. The shaft portion 158 includes detent recesses 166a and 166b and a groove 170 shaped to receive a retention member 174 (Figs. 5 and 6), such as a C-clip.

In the illustrated construction, the locking pin 42 is slidably received in the bosses 82, 86 of the shoe support 34. The shaft portion 158 of the pin 42 is received in the bosses 82, 86 and extends between the side members 50, 54 of the shoe support 34, and the head portion 154 is positioned outside of the shoe support 34. The bracket 146 of the shoe 38 is positioned adjacent the second side member 114 of the shoe support 34 such that one of the apertures 150a, 150b, 150c is coaxially aligned with the bosses 82, 86 when the shoe 38 is in each of the locking positions 96a, 96b, 96c. Therefore, when the locking pin 42 is in the second position, the distal end 162 of the shaft portion 158 is received by one of the apertures 150a, 150b, 150c to lock the shoe 38 in position relative to the shoe support 34.

In the first position (Fig. 5), the locking pin 42 is positioned such that the head portion 154 is spaced away from the side member 50 of the shoe support 34 and the retention member 174 is resting against an inner surface 178 of the locking pin boss 82. The retention member 174 prevents the locking pin 42 from being removed from the shoe support 34. The distal end 162 of the locking pin 42 is disengaged from the bracket 146 of the shoe 38 (i.e., the distal end 162 is not received by one of the apertures 150a, 150b, 150c) such that the shoe 38 is able to freely pivot with respect to the shoe support 34.

In the second position (Fig. 6), the locking pin 42 is moved toward the bracket 146 of the shoe 38 such that the head portion 154 is contacting an outside surface 182 of the shoe support 34. The distal end 162 of the locking pin 42 extends beyond the locking pin boss 86 and is received by one of the apertures 150a, 150b, 150c aligned with the locking pin boss 86 such that the pin 42 engages the shoe 38. With the distal end 162 of the locking pin 42 received by one of the apertures, the locking pin 42 holds the shoe 38 with respect to the shoe support 34 and locks the shoe 38 in one of the locking positions 96a, 96b, 96c at the corresponding engagement angle 130a, 130b, 130c for the respective aperture 150a, 150b, 150c.

In the illustrated construction, the shoe assembly 30 further includes a locking spring 186 coupled to the shoe support 34 by a fastener 190, such as a rivet. The locking spring 186 includes a base end 194 coupled to the shoe support 34 and a distal end 198 extending from the base end 194 and shaped to engage the detent recesses 166a, 166b. Referring to Figs. 5 and 6, the distal end 198 of the locking spring 186 defines a detent for engaging the detent recesses 166a, 166b of the locking pin 42, which maintains the locking pin 42 in either of the first and/or second positions. The locking spring 186 biases the detent 98 into engagement with one of the recesses 166a, 166b. To hold the locking pin 42 in the first position, the detent 198 of the locking spring 186 is received by the detent recess 166b (Fig. 5), and to hold the locking pin 42 in the second position, the detent 198 is received by the detent recess 166a (Fig. 6).

In the illustrated construction, the shoe assembly 30 is assembled as a unit and then installed on the reciprocating saw 10. During assembly, the shoe 38 is positioned relative to the shoe support 34 by aligning the pivot recesses 74, 78 of the shoe support 34 with the respective pivot recesses 110, 118 of the shoe 38. The shoe 38 is coupled to the shoe support 34 by introducing fasteners 128 into the aligned pivot recesses 74, 110 and 78, 118. The distal end 162 of the locking pin 42 is introduced into the locking pin boss 82 of the first extension 66 and inserted until it is received by the locking pin boss 86 of the second extension 70. The locking pin 42 is slidably inserted into the shoe support 34 until the distal end 162 is received in one of the apertures 150a, 150b, 150c of the shoe 38 and the head portion 154 contacts the outer surface 182 of the shoe support 34. The retention member 174 is inserted into the groove 170 of the pin 42 to restrict removal of the pin 42 from the support 34. The base end 194 of the locking spring 186 is coupled to the shoe support 34 by fastener 190 and the distal end 198 engages one of the detent recesses 166a, 166b. Once assembled, the shoe assembly 30 may be coupled to the housing 14 of the reciprocating saw 10.

In operation, the shoe assembly 30 operates in either an unlocked mode or a locked mode. In the unlocked mode, the locking pin 42 is in the first position and, as described above, the shoe 38 is able to rotate freely with respect to the shoe support 34. During operation in the unlocked mode, the shoe support 34 may be pivoted with respect to the work piece 32 while maintaining the contact surface 102 flat against the work piece 32.

In the locked mode, the locking pin 42 is in the second position and, as described above, the distal end 162 is received by one of the plurality of apertures 150a, 150b, 150c of the shoe 38 to lock the shoe 38 at the engagement angle 130a, 130b,130c for the corresponding locking position 96a, 96b, 96c. During operation, the shoe support 34 maintains a constant engagement angle between the shoe 38 and the shoe support 34. When the shoe 38 is in the locked mode, a user may maintain conventional grip positions on the reciprocating saw 10 and provide a force into the work piece 32. With shoe 38 locked in position (e.g., Fig. 7), the angle of the shoe 38 will create a downward force on the work piece 32 by ramping the work piece 32 into the blade 28. Therefore, when a user applies a force in the direction of the work piece 32, the work piece 32 is forced both against the shoe 38 and into the cutting edge 138 of the blade 26 simultaneously. This is more comfortable for the user and allows the saw to be pressed more firmly into the work piece creating a quicker cut.

To place the shoe 38 in the locked mode, the shoe 38 is pivoted with respect to the shoe support 34 until the desired aperture 150a, 150b, 150c aligns with the locking pin boss 86 of the shoe support 34. The locking pin 42 is moved from the first position to the second position, overcoming the bias of the locking spring 186, introducing the distal end 162 into the desired aperture. In the illustrated construction, the detent 198 of the locking spring 186 engages the detent recess 166a to maintain the locking pin 42 in the second position.

Although particular constructions embodying independent aspects of the present invention have been shown and described, other alternative constructions will become apparent to those skilled in the art and are within the intended scope of the independent aspects of the present invention. Various features of the invention are set forth in the following claims.

## Claims

1. A shoe assembly for use with a reciprocating saw having a housing and a saw blade, the shoe assembly comprising:
a shoe support having a longitudinal axis and a base member extending at least partially along the longitudinal axis, wherein the base member defines a first plane;
a shoe pivotably coupled to the shoe support, the shoe including a contact surface defining a second plane and a blade aperture , the shoe further including a plurality of locking positions, each locking position corresponding to an engagement angle, wherein the engagement angle is defined as the angle between the first plane and the second plane; and
a locking pin coupled to the shoe support and moveable between a first position, wherein the shoe is able to pivot with respect to the shoe support, and a second position, wherein the pin engages the shoe to maintain the shoe in one of the plurality of engagement angles.

2. The shoe assembly of claim 1, wherein the engagement angle of one of the plurality of locking positions is approximately 90 degrees.

3. The shoe assembly of claims 1 or 2, wherein the engagement angle of at least one locking position is greater than 90 degrees and the engagement angle of at least one locking position is less than 90 degrees.

4. The shoe assembly of any preceding claim, wherein the shoe includes a plurality of apertures, each aperture defining one of the locking positions, and further wherein the locking pin is received by one of the plurality of apertures when in the second position.

5. The shoe assembly of any preceding claim wherein the locking pin includes at least one detent recess.

6. The shoe assembly of any preceding claim further comprising a locking spring engageable with the detent recess of the locking pin to maintain the locking pin in either of the first and second positions.

7. The shoe assembly of any preceding claim wherein the shoe includes three locking positions.

8. The shoe assembly of any preceding claim wherein the shoe further includes a bracket extending substantially perpendicular to the second plane to define the plurality of locking positions.

9. The shoe assembly of claim 8, wherein the bracket defines a plurality of apertures, each aperture corresponding to one of the locking positions, and further wherein the locking pin is received by one of the plurality of apertures when in the second position.

10. The shoe assembly of any one of claim 1 to 7 further including a bracket extending rearwardly from the contact surface, the bracket including the plurality of locking positions.

11. The shoe assembly of claim 10, wherein the bracket defines three locking positions.

12. The shoe assembly of claims 10 or 11 wherein each locking position is an aperture formed in the bracket.

13. The shoe assembly of any one of claim 10 to 12 wherein the locking pin engages the bracket to maintain the shoe in one of the plurality of locking positions.

14. The shoe assembly of claim 13, wherein the bracket includes a plurality of apertures, each aperture corresponding to one of the locking positions and further wherein the locking pin is received by one of the apertures when in the second position.

15. A reciprocating saw comprising:
a housing;
a motor positioned within the housing;
a spindle operatively coupled to the motor and moveable with respect to the housing,
a blade coupled to the spindle; and
a shoe assembly as claimed in any preceding claim, wherein the shoe support is coupled to the housing.
